# EUROPÄISCHE PATENTSCHRIFT

(11) **EP 2 283 946 B1**
(45) Veröffentlichungstag und Bekanntmachung des Hinweises auf die Patenterteilung: **04.04.2018**
(21) Anmeldenummer: 10007984.7
(22) Anmeldetag: 30.07.2010
(51) Int. Cl.: B21F 35/00, C21D 7/13, C21D 9/02, B21H 7/00, B23P 15/00, C21D 8/02, C21D 1/26, C21D 1/25

(54) **Verfahren zum Herstellen von Parabelfedern oder Lenkerfedern für insbesondere Fahrzeugchassis, Fahrzeugaufbauten und dgl.**
Method for producing parabolic springs or arms for, in particular, vehicle chassis, vehicle structures and the like
Procédé de fabrication de ressorts ou guides paraboliques, notamment pour châssis de véhicule, structures de véhicule et analogue

(30) Priorität: 07.08.2009 DE 102009036512
(43) Veröffentlichungstag der Anmeldung: 16.02.2011
(73) Patentinhaber: Schomäcker Federnwerk GmbH, 49324 Melle (DE)
(72) Erfinder: Temmen, Hubert, 49716 Meppen (DE); Bispink, Torsten Dr.-Ing., 49086 Osnabrück (DE)
(74) Vertreter: Pott, Ulrich

(56) Entgegenhaltungen:
- DE-A1- 10 356 312
- DE-A1- 19 637 968
- DE-A1-102005 062 860
- DE-C- 613 469
- DE-C1- 19 546 204
- GB-A- 959 801
- US-A- 2 775 152
- US-A- 3 453 855

## Beschreibung

Die Erfindung bezieht sich auf ein Verfahren zum Herstellen von Parabelfedern oder Lenkerfedern aus einem metallischen Material für insbesondere Fahrzeugchassis, Fahrzeugaufbauten oder dergleichen aus Werkstücken, die einem Erwärmungsvorgang, einem nachfolgenden Walzvorgang, etwaigen weiteren Bearbeitungsschritten, einem Härtevorgang sowie einem abschließenden Anlassprozess unterzogen werden (Siehe z.B. DE196 37 968 A1, welches die Basis für den Oberbegriff des Anspruchs 1 bildet). Die Herstellung von Lenkerfedern und Parabelfedern (im folgenden kurz Federn bzw. Lenker genannt) für Fahrzeugchassis, Fahrzeugaufbauten, insbesondere Nutzfahrzeugaufbauten und dergleichen ist aufwändig und erfordert für die verschiedenen Bearbeitungsschritte eine Verformung des Querschnittes eines Werkstückes mit separater Erwärmung verschiedener Seiten eines Werkstückes mit anschließender separater Auswalzung des jeweils erwärmten Seitenabschnittes. Daran kann sich eine weitere Formgebung mit ggf. einer Augenanformung und einem anschließenden Härten und einem Anlassvorgang anschließen.

Aus der DE 195 46 204 C1 ist ein Verfahren zur Herstellung von hochfesten Gegenständen aus einem Vergütungsstahl und einer Anwendung dieses Verfahrens zur Erzeugung von Federn bekannt. Danach wird ein Vormaterial zunächst auf Temperaturen 1050°C bis 1200°C lösungsgeglüht und anschließend das Material bei einer Temperatur oberhalb der Rekristallisationstemperatur in einer ersten Stufe warmverformt. Danach ist das Material unterhalb der Rekristallisationstemperatur aber oberhalb der Ar3-Temperatur in einer zweiten Stufe warmverformt worden. Danach folgt ein Abkühlungsprozess mit einem abschließenden Anlassen des Materials. In einem derartigen Verfahren können zwar Blattfedern hergestellt werden, nicht jedoch Lenkerfedern oder Parabelfedern für Fahrzeugchassis, die biege- oder rollgerichtet werden müssen.

Es ist Aufgabe der vorliegenden Erfindung, ein Verfahren der eingangs genannten Art dahingehend zu verbessern, bei dem der Herstellungsvorgang insgesamt zeit- und kostenoptimierter durchgeführt werden kann.

Zur Lösung dieser Aufgabe zeichnet sich das Verfahren der eingangs genannten Art durch die im Patentanspruch 1 angegebenen Merkmale aus. Hinsichtlich wesentlicher weiterer Ausgestaltungen des Verfahrens wird auf die Patentansprüche 2 bis 15 verwiesen.

Damit ist zunächst ein Verfahren zur Verfügung gestellt, das mit nur einer Erwärmung des Werkstückes zu Beginn des Herstellungsvorganges auskommt. Durch die automatische oder teilautomatische Förderung des Werkstückes mit optimierter Förderstrecke können jeweils Temperaturphasen des Werkstückes genutzt werden, um die beschriebenen Bearbeitungsschritte in dem jeweiligen Temperaturbereich durchführen zu können. Wesentlich dabei ist auch, dass ein Auswalzvorgang des Werkstückes parallel zu dessen beiden Seiten erfolgen kann, ohne dass eine separate zeitaufwändige Übergabe von einer ersten Walzstation zu einer zweiten Walzstation mit zwischenzeitlicher Erwärmung des Werkstückes durchzuführen ist. Gleiches gilt auch für ein etwaiges Richten des Werkstückes, das ebenfalls parallel zu beiden Seiten des Werkstückes erfolgt. Insgesamt ist damit eine Verfahrensweise zur Verfügung gestellt, mit der wesentlich schneller und auch kostengünstiger ein Lenker oder eine Feder hergestellt werden können.

Zur weiteren Erläuterung der Erfindung wird auf die nachfolgende Beschreibung und die Zeichnung verwiesen.
- Fig. 1: ein Ablaufschema der Herstellung einer Feder oder eines Lenkers in Einzeldarstellungen a), b), c), d) e), f), g), h), i), j), k), I), m), n), o), p), q), r), s), t), u), v),
- Fig. 2: in einer schematischen Seitenansicht die Vorrichtung zum Auswalzen des Werkstückes mit zwei Klemmeinheiten und einem Walzenpaar;
- Fig. 3: eine zu Fig. 2 analoge Darstellung mit Übergabe des Werkstückes an die andere Klemmeinheit,
- Fig. 4: eine zu den Fig. 2 und 3 analoge Darstellung mit einer translatorisch bewegbaren Klemmeinheit,
- Fig. 5: eine zu Fig. 4 analoge Darstellung mit einer Klemmeinheit und zwei translatorisch beweglich geführten Walzenpaaren und
- Fig. 6: ein Ausführungsbeispiel einer Klemmeinheit mit einem Schlitten, der eine translatorische Bewegung der Klemmeinheit in Längsrichtung des Werkstückes ermöglicht, darüber hinaus jedoch auch noch eine Höhenanpassung des Klemmschlittens über eine Beweglichkeit in senkrechter Richtung zur Längsrichtung des Werkstückes.

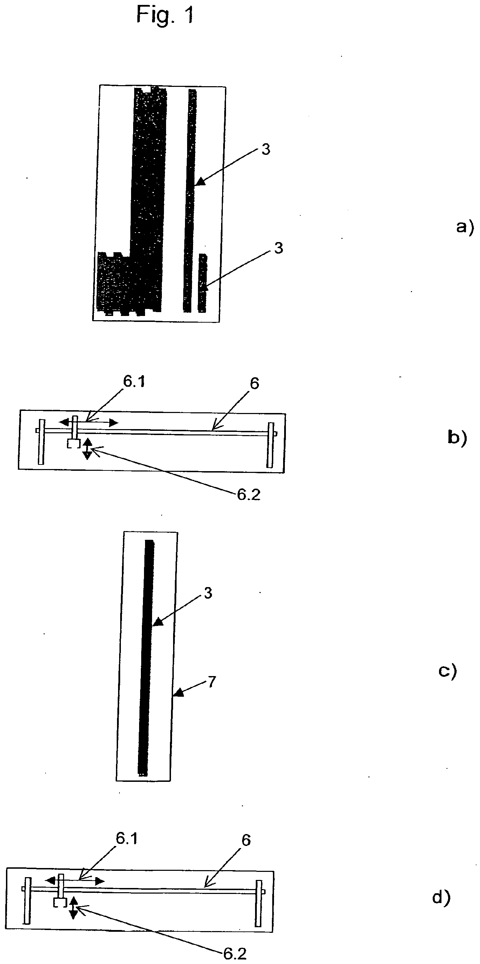

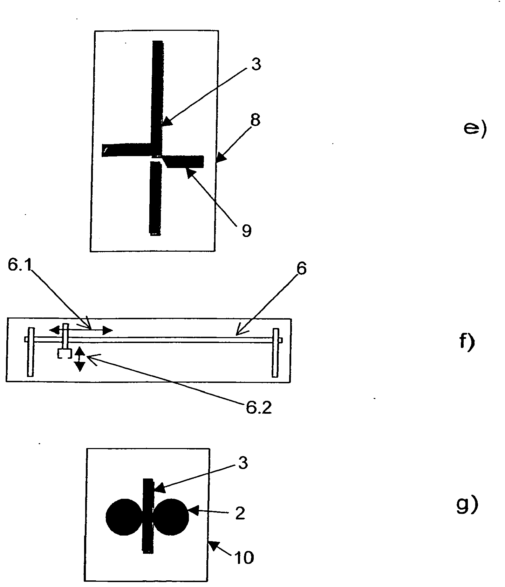

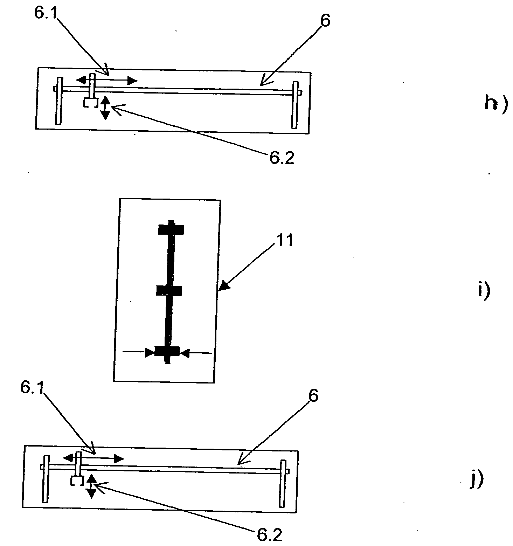

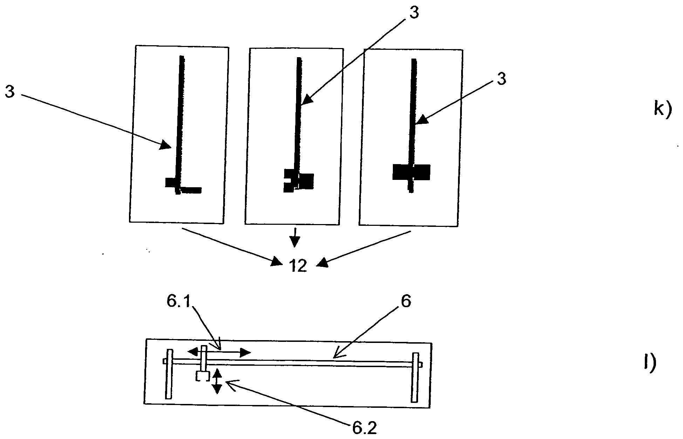

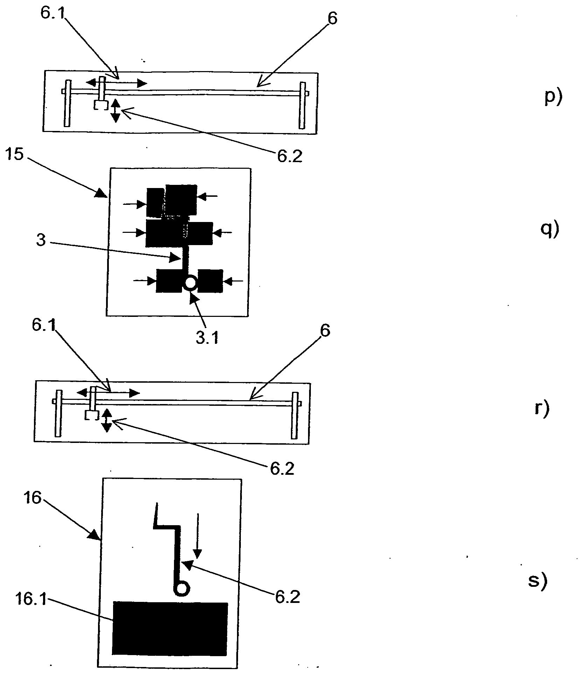

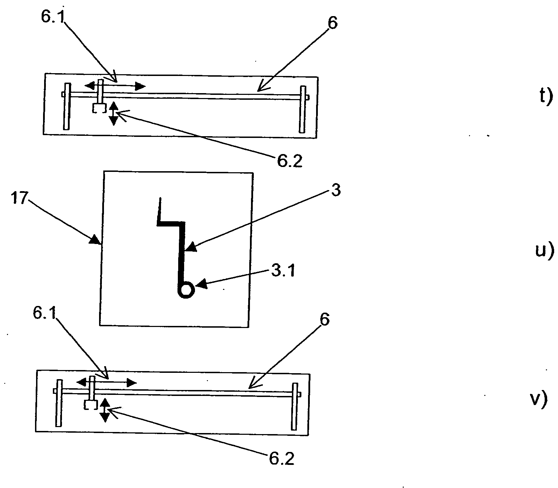

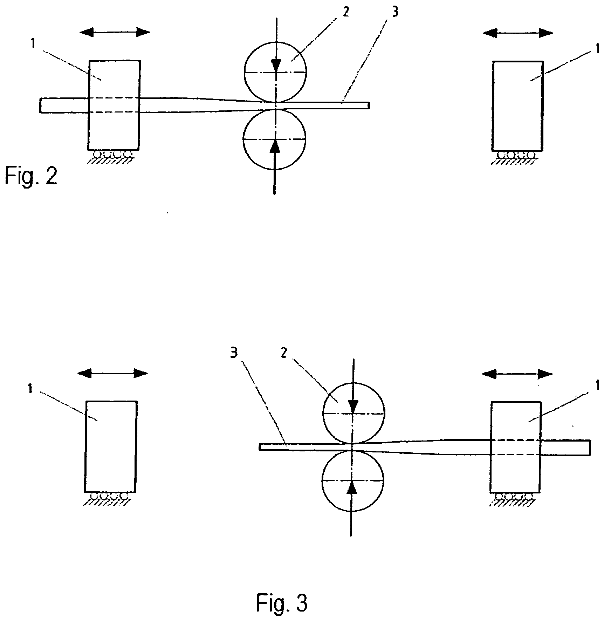

In der Zeichnung sind gleichwirkende Teile mit übereinstimmenden Bezugsziffern versehen. In Fig. 1a ist ein Ausführungsbeispiel dargestellt, bei der einzelne Werkstücke 3 einzeln, als Langmaterial oder als zugeschnittenes Material anfallen können. Diese werden zunächst gemäß Fig. 1b über eine Transportvorrichtung 6, die entsprechend der Pfeile 6.1 und 6.2 Transportbewegungen ausführen kann, transportiert in einem Gas-, Elektro-, Konduktions- oder Induktionsofen 7 auf eine Temperatur von 1.000°C und 1.400°C erwärmt wird. Dabei kann die Erwärmung im Durchlauf aber auch diskontinuierlich erfolgen. Diese Erwärmung ist so gewählt auf Temperaturbereiche, dass für die weitere Bearbeitung des Werkstückes 3 (zur Parabelfeder oder zum Lenker) keine weitere Erwärmung mehr notwendig ist. Von diesem Ofen 7 erfolgt die Fortführung des Werkstückes wiederum über die Transportvorrichtung 6 (Fig. 1d) zu einer Ablängeinrichtung 8, die Trennschleifen oder Brennschneider 9 aufweisen kann, um das Werkstück auf die gewünschte Länge zu bringen (Fig. 1e). Über eine Transportvorrichtung 6 (Fig. 1f) gelangt das Werkstück zu einer Walzstation 10 mit Walzenpaaren 2 und einer in Fig. 1g nicht gezeigten Klemmeinheit, die in verschiedenen Ausführungsbeispielen noch näher in den Fig. 2, 3, 4, 5 und 6 erläutert werden wird. Über die Transportvorrichtung 6 gelangt dann das Werkstück zu einer Richteinheit 11, in der man mit Temperaturen zwischen 750° und 1.250°C ein zeitgleiches Richten auf beiden Seiten, beispielsweise ein Biege- oder Rollrichten stattfindet. Über die Transporteinrichtung 6 (Fig. 1j) gelangt das Werkstück dann in eine Vorrichtung zum Schneiden, Stanzen, Prägen oder Signieren, je nach dem, was bei dem Lenker bzw. der Feder erforderlich ist. Soweit nicht erforderlich, können einzelne der Stationen oder aller Stationen ausgelassen werden. Die Bearbeitung kann parallel oder nacheinander erfolgen. Wesentlich ist, dass das Werkstück hierbei noch eine Temperatur zwischen 750°C und 1.250°C aufweist (Fig. 1k).

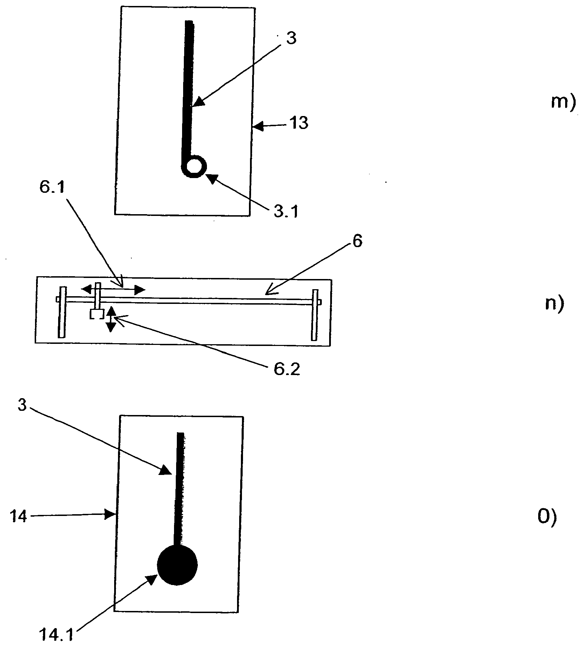

Falls im Werkstück ein Auge anzuformen ist, gelangt es über die Transportvorrichtung 6 (Fig. 1l) zu einer Augenformstation 3, wo ein Auge 3.1 angeformt wird, wiederum bei Temperaturen zwischen 700°C und 1.200°C (Fig. 1m). Über die Transportvorrichtung 6 (Fig. 1n) kann dann das Auge 3.1 in einer Pressstation 14 gestaucht werden bei Temperaturen zwischen 700°C und 1.200°C. Diese Station ist allerdings auch umgehbar, so dass das Werkstück mit aber auch ohne Stauchung gefertigt werden kann. Der Stempel 14.1 der Pressstation 14 beaufschlagt dabei das Werkstück von unten (Fig. 1o). Über die Transportstation 6 (Fig. 1p) gelangt dann das Werkstück 3, ggf. mit dem angeformten Auge 3.1 zu einer Station 15, in der gekröpft, gebogen und geschmiedet werden kann bei Temperaturen zwischen 700°C und 1.200°C. Dieser Kröpf-, Biege- oder Schmiedevorgang kann in Teilschritten oder in einem Vorgang erfolgen (Fig. 1q). Über die Transporteinrichtung 6 gelangt dann das Werkstück zu einer Härteeinrichtung 16, um es bei einer Härtetemperatur zwischen 700°C und 1.200°C in einem Härtemedium 16.1 abzuschrecken (Fig. 1s).

Über die Transporteinrichtung 6 kann es dann einer Anlassstation 17 zugeführt werden, wo es bei Temperaturen zwischen 250°C und 600°C angelassen werden kann. Dazu kann ein Durchlaufofen vorgesehen sein, der eine anschließende Abkühlstrecke Wasserdusche hat. Es ist auch ebenfalls möglich, dies ohne eine Abkühlstrecke durchzuführen. Über die Transporteinrichtung 6 kann es dann in eine Lager- oder eine Versandstation überbracht werden (Fig. 1v).

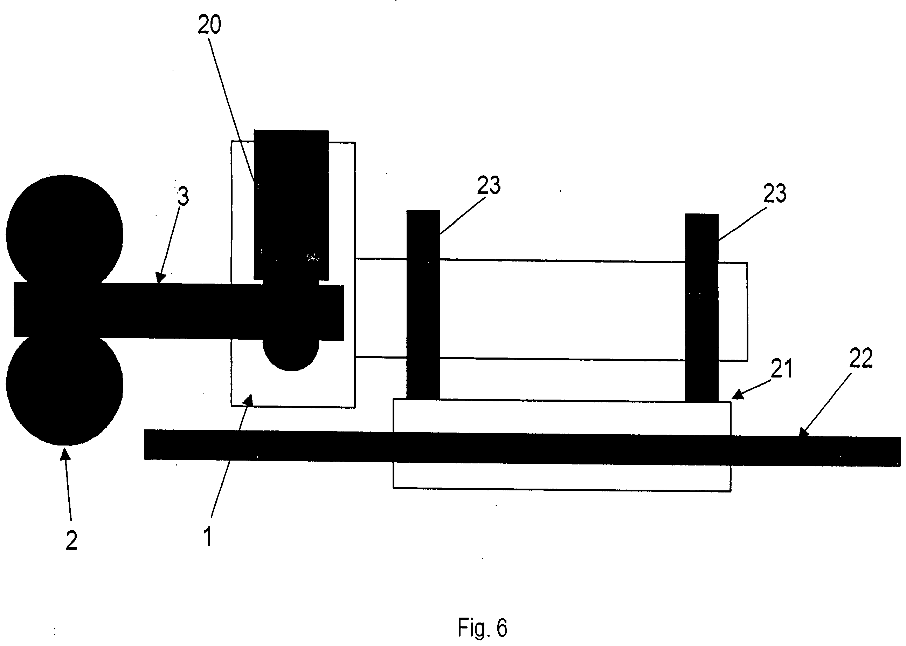

In den Fig. 2 bis 6 sind Ausführungsbeispiele der Auswalzstation (Fig. 1g) näher veranschaulicht. Allgemein mit 1 ist dort eine Klemmeinheit beziffert, die sich z. B. der Form eines Werkstückes anpassen lässt, ohne Biegekräfte aufzubringen. Dazu können verstellbare Innenteile, beispielsweise Klemmbacken 20 vorgesehen sein (Fig. 6), um entsprechende Winkel einstellen zu können. Diese können beispielsweise auch zweiteilig ausgebildet sein mit Hälften, die sich um eine vertikale und eine horizontale Achse verschwenken lassen. Es können ebenfalls Sensoren vorgesehen sein, damit sich die Klemmeinheit sicher mit einstellbarer Klemmkraft an das Werkstück anpassen lässt.

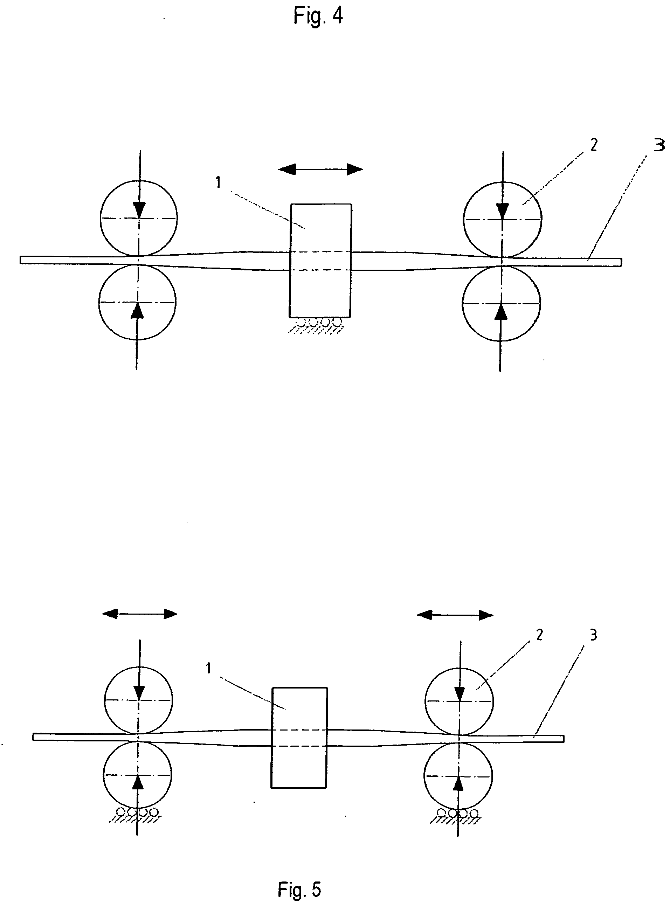

In dem Ausführungsbeispiel nach Fig. 2 sind insgesamt zwei Klemmeinheiten vorgesehen, die sich linear bzw. translatorisch bewegen lassen. In diesem Ausführungsbeispiel ist ein Walzenpaar 2 vorgesehen, wobei die Darstellung, obgleich sie links ein Walzenpaar zeigt, veranschaulichen soll, dass einmal die in Fig. 2 linke Klemmeinheit in Aktion ist und ansonsten die in der Figur rechte Klemmeinheit 1, nach dem das Werkstück 3 von der ersten Klemmeinheit an die zweite Klemmeinheit (rechts) übergeben wurde. Dies ist näher in Fig. 3 dargestellt. Die Auswalzarbeit übernimmt das zentrale Walzenpaar 2.
In dem Ausführungsbeispiel nach Fig. 4 ist wiederum eine linear- bzw. translatorisch geführte Klemmeinheit 1 vorgesehen, wobei insgesamt zwei Walzenpaare vorgesehen sind, um in einem Arbeitsgang beide Seiten des Werkstückes 3 zu bearbeiten. In dem Ausführungsbeispiel nach Fig. 5 ist anstelle der translatorisch vorbewegbaren Klemmeinheit 1 vorgesehen, dass die beiden Walzenpaare 2 translatorisch nach links und rechts zu bewegen sind, wie dies die Zeilen andeuten.
In Fig. 6 ist die Klemmeinheit 1 in einem speziellen Ausführungsbeispiel näher veranschaulicht. Diese hat einen Klemmschlitten 21 mit einer Stange 22, entlang derer der Klemmschlitten 21 translatorisch parallel zur Längserstreckung des Werkstückes 3 zu bewegen ist. An diesem Klemmschlitten ragen vertikal ausgerichtete Stangen 23 empor, an denen die Klemmeinheit 1 vertikal zur Längserstreckung des Werkstückes und damit höhenbeweglich geführt werden kann, um die Klemmeinheit entsprechend dem zu walzenden Werkstück anpassen zu können.

## Patentansprüche

1. Verfahren zum Herstellen von Parabelfedern oder Lenkerfedern für insbesondere Fahrzeugchassis, Fahrzeugaufbauten und dgl. aus Werkstücken, die einem Erwärmungsvorgang, einem nachfolgenden Walzvorgang, weiteren Bearbeitungsschritten, einem Härtevorgang sowie einem abschließenden Anlassprozess unterzogen werden, **dadurch gekennzeichnet, dass**
a) das Werkstück (3) nach einer etwa notwendigen Vereinzelung in einem Ofen (7) auf eine Temperatur zwischen 1.000°C und 1.400°C erwärmt wird, sodass für die weitere Bearbeitung des Werkstückes (3) keine weitere Erwärmung mehr notwendig ist;
b) das Werkstück (3) erforderlichenfalls einer Ablängvorrichtung (8) zugeführt und bei einer Temperatur zwischen 1.000°C und 1.300°C einem Ablängvorgang unterzogen wird;
c) das Werkstück (3) wird einer Walzvorrichtung (10) zugeführt und bei einer Temperatur zwischen 800°C und 1.300°C gewalzt wird;
d) das Werkstück (3) zu einer Richtvorrichtung (11) transportiert und bei einer Temperatur zwischen 750°C und 1.250°C biege- oder rollgerichtet wird;
e) das Werkstück (3) zu einer Bearbeitungsvorrichtung transportiert und bei einer Temperatur zwischen 750°C und 1.250°C ein Schneid-, Stanz-, Präge- und/oder Signiervorgang durchgeführt wird;
f) das Werkstück (3) zu einer weiteren Bearbeitungsvorrichtung transportiert wird, bei der bei Temperaturen zwischen 750°C und 1.200°C eine Augenformgebung und ein Stauchvorgang bei Temperaturen zwischen 700°C und 1.200°C durchgeführt wird;
g) das Werkstück (3) in Teilschritten oder in einem Vorgang bei Temperaturen zwischen 700°C und 1.200°C einen Kröpf-, Biege- und/oder Schmiedevorgang unterzogen wird;
h) das Werkstück (3) ohne weitere Erwärmung einem Härteprozess bei einer Härtetemperatur zwischen 700°C und 1.200°C zugeführt wird;
i) das so gehärtete Werkstück (3) kann einem Anlassvorgang in einem Durchlaufofen (7) mit oder ohne nachfolgender Abkühlstrecke bei Temperaturen zwischen 250°C und 600°C unterzogen wird.

2. Verfahren nach Anspruch 1, **dadurch gekennzeichnet, dass** die Erwärmung des Werkstückes (3) auf eine Temperatur zwischen 1.000° und 1.400°C kontinuierlich oder schrittweise im Durchlauf erfolgt.

3. Verfahren nach Anspruch 1 oder 2, **dadurch gekennzeichnet, dass** die Erwärmung des Werkstückes (3) auf eine Temperatur zwischen 1.000°C und 1.400°C in einem Gas-, Elektro-, Induktions- oder Konduktionsofen (7) erfolgt.

4. Verfahren nach einem der Ansprüche 1 bis 3, **dadurch gekennzeichnet, dass** ein etwaiges Ablängen eines langen Werkstückes (3) fliegend oder nicht fliegend erfolgt.

5. Verfahren nach einem der Ansprüche 1 bis 4, **dadurch gekennzeichnet, dass** das etwaige Ablängen eines langen Werkstückes (3) mittels Trennschleifen, Brennschneiden oder Abscheren erfolgt.

6. Verfahren nach einem der Ansprüche 1 bis 5, **dadurch gekennzeichnet, dass** ein Auswalzen eines Werkstückes (3) nach Festlegen des Werkstückes (3) in einer Klemmeinheit (3) mittels eines Walzenpaares (2) erfolgt und zunächst mittels des Walzenpaares (2) ein Bereich ausgewalzt wird und das Werkstück (3) danach mit dem ausgewalzten Bereich an eine zweite Klemmeinheit (1) weitergegeben wird und dort festlegbar ist und danach mittels des Walzenpaares (2) ein noch nicht ausgewalzter Bereich ausgewalzt wird.

7. Verfahren nach Anspruch 6, **dadurch gekennzeichnet, dass** zumindest eine der Klemmeinheiten (1) für einen Übergabevorgang des Werkstücks (3) an die andere Klemmeinheit (1) translatorisch verfahren wird.

8. Verfahren nach Anspruch 6 oder 7, **dadurch gekennzeichnet, dass** zur Übergabe des Werkstückes (3) beide Klemmeinheiten (1) verfahren werden.

9. Verfahren nach einem der Ansprüche 1 bis 5, **dadurch gekennzeichnet, dass** das Werkstück (3) zum Auswalzen von zwei Walzenpaaren (2) zum Auswalzen beaufschlagt wird und eine Klemmeinheit (1) während des Auswalzvorganges das Werkstück (3) zu den beiden Walzenpaaren (2) transportiert.

10. Verfahren nach Anspruch 9, **dadurch gekennzeichnet, dass** die Klemmeinheit (1) relativ zu dem Werkstück (3) verfahren wird.

11. Verfahren nach einem der Ansprüche 1 bis 5, **dadurch gekennzeichnet, dass** das Werkstück (3) von zwei Walzenpaaren (2), die sich jeweils außerhalb einer Klemmeinheit (1) erstrecken, beaufschlagbar ist, wobei während des Auswalzvorganges die Klemmwalzenpaare (2) hin- und herbewegt werden.

12. Verfahren nach einem der Ansprüche 1 bis 11, **dadurch gekennzeichnet, dass** ein Biege- oder Rollrichten bei den Temperaturen zwischen 750°C und 1.250°C parallel auf beiden Seiten eines Werkstückes (3) erfolgt.

13. Verfahren nach einem der Ansprüche 1 bis 12, **dadurch gekennzeichnet, dass** die Bearbeitung des Werkzeuges (3) in der Reihenfolge Schneiden, Stanzen, Prägen mit abschließendem Signieren erfolgt.

14. Verfahren nach einem der Ansprüche 1 bis 13, **dadurch gekennzeichnet, dass** ein Kröpfen, Biegen und/oder Schmieden des Werkstückes (3) in Teilschritten oder in einem Vorgang erfolgt.

15. Verfahren nach einem der Ansprüche 1 bis 14, **dadurch gekennzeichnet, dass** das Anlassen bei Temperaturen zwischen 250°C und 600°C in einem Durchlaufofen (7) erfolgt.

## Claims

1. Method for producing parabolic springs or suspension links in particular for vehicle chassis, vehicle superstructural parts and the like made of workpieces that undergo a heating process, a subsequent rolling process, further machining steps, a hardening process and a final tempering process, **characterised in that**
a) the workpiece (3) is heated to a temperature of between 1000°C and 1400°C in a furnace (7) after any necessary separation, such that no further heating is necessary for the further machining of the workpiece (3);
b) the workpiece (3) is fed, if necessary, into a device (8) for cutting to length undergoes a process of cutting to length at a temperature of between 1000°C and 1300°C;
c) the workpiece (3) is fed into a rolling device (10) and rolled at a temperature of between 800°C and 1300°C;
d) the workpiece (3) is transported to a straightening device (11) and is bend-straightened or roll-straightened at a temperature of between 750°C and 1250°C;
e) the workpiece (3) is transported to a machining device and a cutting, stamping, embossing and/or marking process is carried out at a temperature of between 750°C and 1250°C;
f) the workpiece (3) is transported to an additional machining device, at which eye shaping is carried out at temperatures of between 750°C and 1200°C and a swaging process is carried out at temperatures of between 700°C and 1200°C;
g) the workpiece (3) undergoes a right angle-bending, bending or forging process in partial steps or in a single process at temperatures of between 700°C and 1200°C;
h) the workpiece (3) is fed, without further heating, to a hardening process at a hardening temperature of between 700°C and 1200°C;
i) the workpiece (3) hardened in this way can undergo a tempering process in a continuous furnace (7), with or without a subsequent cooling stretch, at temperatures of between 250°C and 600°C.

2. Method according to claim 1, **characterised in that** the workpiece (3) is heated to a temperature of between 1000°C and 1400°C continuously or gradually, in a continuous process.

3. Method according to either claim 1 or claim 2, **characterised in that** the workpiece (3) is heated to a temperature of between 1000°C and 1400°C in a gas, electric, induction or conduction furnace (7).

4. Method according to any of claims 1 to 3, **characterised in that** possible cutting to length of a long workpiece (3) is carried out in a flying or non-flying manner.

5. Method according to any of claims 1 to 4, **characterised in that** the possible cutting to length of a long workpiece (3) is carried out by means of abrasive cutting, flame-cutting or shearing.

6. Method according to any of claims 1 to 5, **characterised in that** a workpiece (3) is rolled out by means of a pair of rollers (2) after the workpiece (3) has been fixed in a clamping unit (3), and firstly a region is rolled out by means of the pair of rollers (2), and then the workpiece (3), together with the rolled-out region, is passed on to a second clamping unit (1) and can be fixed therein, and a region that is not yet rolled out is then rolled out by means of the pair of rollers (2).

7. Method according to claim 6, **characterised in that** at least one of the clamping units (1) is moved in translation for a process of transferring the workpiece (3) to the other clamping unit (1).

8. Method according to either claim 6 or claim 7, **characterised in that** both clamping units (1) are moved in order to transfer the workpiece (3).

9. Method according to any of claims 1 to 5, **characterised in that** the workpiece (3) to be rolled out is acted on by two pairs of rollers (2) for rolling out, and a clamping unit (1) transports the workpiece (3) to the two pairs of rollers (2) during the rolling out process.

10. Method according to claim 9, **characterised in that** the clamping unit (1) is moved relative to the workpiece (3).

11. Method according to any of claims 1 to 5, **characterised in that** the workpiece (3) can be acted on by two pairs of rollers (2) that each extend outside a clamping unit (1), the clamping pair of rollers (2) being moved back and forth during the rolling out process.

12. Method according to any of claims 1 to 11, **characterised in that** bend-straightening or roll-straightening occurs in parallel on both sides of a workpiece (3) at temperatures of between 750°C and 1250°C.

13. Method according to any of claims 1 to 12, **characterised in that** the workpiece (3) is machined in the sequence of cutting, stamping, embossing and finally marking.

14. Method according to any of claims 1 to 13, **characterised in that** the workpiece (3) is bent at right angles, bent and/or forged in partial steps or in a single process.

15. Method according to any of claims 1 to 14, **characterised in that** the tempering occurs in a continuous furnace (7) at temperatures of between 250°C and 600°C.

## Revendications

1. Procédé de fabrication de ressorts paraboliques ou de ressorts de bras oscillants destinés notamment à des châssis de véhicules, des carrosseries de véhicules et analogues, à partir de pièces qui ont été soumises à un processus de chauffage, un processus de laminage ultérieur, à d'autres étapes de traitement, un procédé de durcissement et un processus de revenu final, **caractérisé en ce que**
a) la pièce (3) est chauffée, après un isolement peut-être nécessaire, dans un four (7) à une température comprise entre 1000 °C et 1400 °C de sorte qu'aucun chauffage supplémentaire n'est nécessaire pour le traitement ultérieur de la pièce (3) ;
b) la pièce (3) est amenée, si nécessaire, à un dispositif de tronçonnement (8) et est soumise à un processus de tronçonnement à une température comprise entre 1000 °C et 1300 °C ;
c) la pièce (3) est amenée à un dispositif de laminage (10) et est laminée à une température comprise entre 800 °C et 1300 °C ;
d) la pièce (3) est transportée vers un dispositif de dressage (11) et est dressée par pliage ou laminage à une température comprise entre 750 °C et 1250 °C ;
e) la pièce (3) est transportée vers un dispositif de traitement et un processus de découpage, d'emboutissage, de gaufrage et/ou de marquage est effectuée à une température comprise entre 750 °C et 1250 °C ;
f) la pièce (3) est transportée vers un autre dispositif de traitement dans lequel un formage d'oeil est effectuée à des températures comprises entre 750 °C et 1200 °C et un processus de refoulement est effectuée à des températures comprises entre 700 °C et 1200 °C ;
g) la pièce (3) est soumise à un processus de coudage, de pliage et/ou de forgeage dans des étapes partielles ou dans un processus à des températures comprises entre 700 °C et 1200 °C ;
h) la pièce (3) est amenée sans préchauffage supplémentaire à un processus de durcissement à des températures comprises entre 700 °C et 1200 °C ;
i) la pièce (3) ainsi durcie peut être soumise à un processus de revenu dans un four continu (7) avec ou sans section de refroidissement subséquente à des températures comprises entre 250 °C et 600 °C.

2. Procédé selon la revendication 1, **caractérisé en ce que** le chauffage de la pièce (3) est effectué dans le cycle de façon continue ou par étapes à une température comprise entre 1000 et 1400 °C.

3. Procédé selon la revendication 1 ou 2, **caractérisé en ce que** le chauffage de la pièce (3) est effectué dans un four à gaz, un four électrique, un four à induction ou un four à conduction (7) à une température comprise entre 1000 °C et 1400 °C.

4. Procédé selon l'une des revendications 1 à 3, **caractérisé en ce qu'**un éventuel tronçonnage d'une longue pièce (3) est effectuée de manière volante ou non.

5. Procédé selon l'une des revendications 1 à 4, **caractérisé en ce que** l'éventuel tronçonnage d'une longue pièce (3) est effectué au moyen par meulage de coupe, découpage au chalumeau ou par cisaillement.

6. Procédé selon l'une des revendications 1 à 5, **caractérisé en ce qu'**un laminage d'une pièce (3) est effectué au moyen d'une paire de rouleaux (2) après avoir immobiliser la pièce (3) dans une unité de serrage (3) et une zone est tout d'abord laminé au moyen de la paire de rouleaux (2) et la pièce (3) est ensuite transférée avec la zone laminée vers une seconde unité de serrage (1) où elle peut être immobilisée puis une zone non encore laminée est laminée au moyen de la paire de rouleaux (2).

7. Procédé selon la revendication 6, **caractérisé en ce que** l'une au moins des unités de serrage (1) est déplacée en translation en vue d'un processus de transfert de la pièce (3) vers l'autre unité de serrage (1).

8. Procédé selon la revendication 6 ou 7, **caractérisé en ce que** les deux unités de serrage (1) sont déplacées en vue du transfert de la pièce (3).

9. Procédé selon l'une des revendications 1 à 5, **caractérisé en ce que** la pièce (3) est soumise au laminage par deux paires de rouleaux (2) et, pendant le processus de laminage, une unité de serrage (1) transporte la pièce (3) vers les deux paires de rouleaux (2).

10. Procédé selon la revendication 9, **caractérisé en ce que** l'unité de serrage (1) est déplacé par rapport à la pièce (3) .

11. Procédé selon l'une des revendications 1 à 5, **caractérisé en ce que** la pièce (3) peut être sollicitée par deux paires de rouleaux (2) qui s'étendent chacune à l'extérieur d'une unité de serrage (1), les paires de rouleaux de serrage (2) étant déplacées suivant un mouvement alternatif pendant le processus de laminage.

12. Procédé selon l'une des revendications 1 à 11, **caractérisé en ce qu'**un dressage par pliage ou laminage est effectué à des températures comprises entre 750 °C et 1250 °C parallèlement des deux côtés d'une pièce (3).

13. Procédé selon l'une des revendications 1 à 12, **caractérisé en ce que** l'usinage de l'outil (3) est effectué dans l'ordre découpage, emboutissage, gaufrage avec marquage finale.

14. Procédé selon l'une des revendications 1 à 13, **caractérisé en ce qu'**un coudage, pliage et/ou forgeage de la pièce (3) est effectué par sous-étapes ou en une seule opération.

15. Procédé selon l'une des revendications 1 à 14, **caractérisé en ce que** le revenu est effectué à des températures comprises entre 250 °C et 600 °C dans un four continu (7).
